Europäisches Patentamt

European Patent Office

Office européen des brevets

(11) Publication number: **0 571 886 A1**

# EUROPEAN PATENT APPLICATION

(21) Application number: **93108118.6**

(22) Date of filing: **18.05.93**

(51) Int. Cl.⁵: **G01P 15/16**, G01P 15/08, G01P 3/486, G01P 3/488

(30) Priority: **18.05.92 JP 124000/92**

(43) Date of publication of application:
**01.12.93 Bulletin 93/48**

(84) Designated Contracting States:
**AT CH DE GB LI**

(71) Applicant: **Kabushiki Kaisha Meidensha**
**2-1-17, Osaki,**
**Shinagawa-ku**
**Tokyo(JP)**

(72) Inventor: **Suzuki, Yorikatsu, c/o K.K.**
**Meidensha**
**2-1-17, Osaki**
**Shinagawa-ku, Tokyo(JP)**

(74) Representative: **Finsterwald, Manfred,**
**Dipl.-Ing., Dipl.-Wirtsch.-Ing. et al**
**Manitz, Finsterwald & Rotermund**
**Patentanwälte**
**Postfach 22 16 11**
**D-80506 München (DE)**

(54) **Apparatus for measuring angular acceleration.**

(57) An apparatus for measuring an angular acceleration of a rotary shaft, comprises a disc plate (10) attached to the rotary shaft in such a manner as to outwardly extend from the rotary shaft, at least two pulse pick-ups (12a,12b) arranged in the vicinity of the periphery of the disc plate (10) in a manner so as to offset from each other by an identical phase angle difference with respect to the disc plate for monitoring the number of revolution of the disc plate (10), a pulse processing circuit connected to the pulse pick-ups (12a,12b) to process the pulse signal from each pick-up (12a,12b) and to derive an angular acceleration of the disc plate (10). The pulse processing circuit includes an adder (17,19) arranged downstream of the pick-ups for adding input signals to eliminate an erroneous component created due to an eccentricity of the center axis of the inductor to the axis of the disc plate (10) from an adder output signal.

**FIG.1**

EP 0 571 886 A1

## BACKGROUND OF THE INVENTION

Field of the Invention

The present invention relates to an angular acceleration measurement apparatus, comprising an electromagnetic rotary encoder employing a disc-like inductor, an optical rotary encoder employing slit plates, or the like, and specifically to a measurement apparatus which is capable of providing high measuring accuracy of angular acceleration with a high responsiveness, irrespective of a machining error, such as an off-center arrangement of the rotary inductor of the magnetic encoder or the rotary slit plate of the optical encoder.

Description of the Prior Art

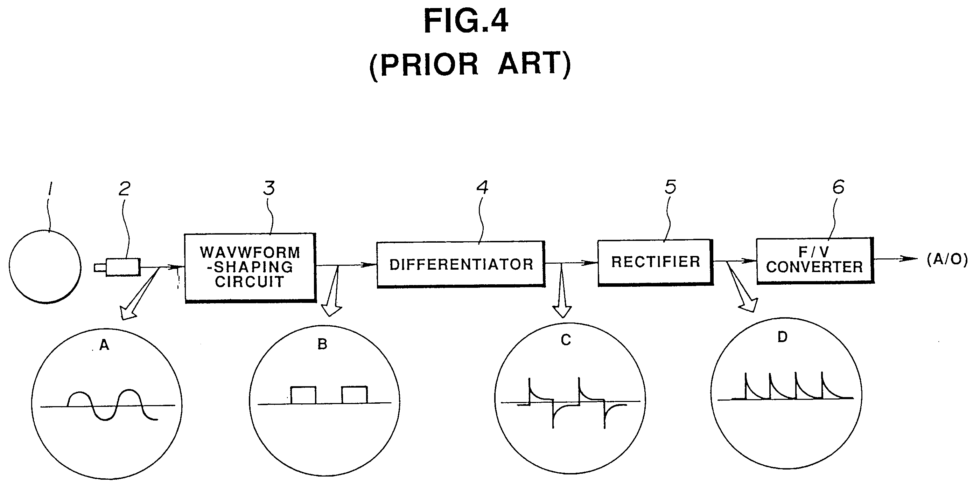

As is generally known, it is important to compensate or control a moment of inertia of the rotor operably arranged in an electric chassis dynamometer, an electric motor, or a power train performance test machine for automotive vehicles. For example, a prior art simulated power train performance test machine generally comprises an angular acceleration measurement apparatus including at least one pulse pick-up in order to generate a feed-back control signal on the basis of changes in angular acceleration of the rotor assembled in the test machine. Thus, it is important to precisely measure or derive such angular acceleration data serving as a control parameter. One such conventional angular acceleration measurement apparatus having an electro-magnetic pulse pick-up is shown in Fig. 4.

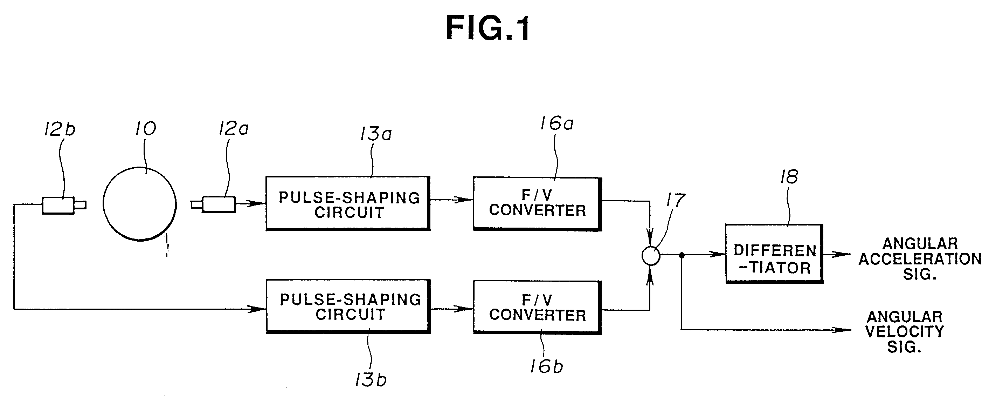

Referring now to Fig. 4, the angular acceleration measurement apparatus comprises a disc-like inductor **1** coaxially arranged onto the rotary shaft of a measured rotating member, an electro-magnetic pulse pick-up **2** arranged close to the outer peripheral surface of the inductor **1** for monitoring its revolution speed or rotational frequency and for generating a substantially sinusoidal waveform signal, a waveform-shaping circuit **3** connected to the output terminal of the pick-up **2** for processing the output signal **A** generated by the pick-up **2** and for converting the sinusoidal waveform signal to a rectangular pulse signal **B**, a differentiator **4** differentiating the signal **B** from the wave-forming circuit **3** to generate a differentiated signal **C**, a rectifier **5** connected to the differentiator **4** for rectifying the differentiated signal **C** to generate a rectified pulse signal **D**, and a frequency-to-voltage converter **6** connected to the rectifier **5** for converting the frequency of the rectified pulses **D** to an analogue signal **A/O**, such as a voltage. As appreciated from the waveforms **B** and **D** of in Fig. 1, the rectified pulses **D** are generated at both timings of a leading edge and a trailing edge of each pulse wave **B**, with the result that the frequency of the differentiated pulse wave **D** becomes two times greater than the frequency of the pulse wave **B**. The greater the frequency becomes, the higher the response speed of the angular acceleration measurement becomes. In the case of the conventional measurement apparatus of Fig. 4, two times higher response speed can be obtained by the aforementioned two times greater frequency. In this manner, the response speed of the measurement is stepped up, as the number of the pulse pick-ups is increased. After the angular velocity signal **A/O** is derived through the above-noted process, an angular acceleration signal is obtained by further differentiating the angular velocity signal **A/O**. The electro-magnetic pulse pick-up **2** is traditionally comprised of a substantially cylindrical permanent magnet serving as a probe, a voltage generating coil arranged along the outer peripheral surface of the permanent magnet core, and a sensor casing enclosing both the permanent magnet and the coil as a sensor unit. Although it is not clearly shown in Fig. 4, the inductor **1** has a toothed portion on its outer periphery. Teeth are arranged on the outer periphery of the inductor **1** at the same interval in a conventional manner. The toothed portion is traditionally made of metal, so as to cause changes in flux of magnetic induction in the electro-magnetic pulse pick-up. The probe portion of the pick-up **2** is radially aligned with respect to the central axis of the inductor **1**. Additionally, the probe of the pick-up **2** is arranged in the vicinity of the toothed portion to generate the sinusoidal signal **A** during rotation of the inductor **1**. Assuming that the respective pitch between the adjacent teeth is identical, the pulse pick-up **2** creates a precisely simulated pulse signal based on the revolution speed of the rotary shaft, thereby resulting in avoiding frequency fluctuations offsetting from an actual rotational frequency (revolution speed) of the rotary shaft. Such frequency fluctuations also occur due to an eccentricity between the axis of the rotary shaft of the measured rotating member and the central axis of the inductor **1**. As appreciated from the above, it is necessary to perform precise machining for the toothed portion of the geared inductor **1** and to provide precise coaxial arrangement between the shaft of the measured rotating member and the inductor **1**, so as to assure precise angular velocity measurement (consequently more precise angular acceleration measurement). Thus, the conventional angular acceleration measurement apparatus of Fig. 4 requires extremely precise machining of the inductor **1** in order to insure a high accuracy of the angular

2

acceleration measurement. In the case of the optical encoder, there is the same problem. The previously described frequency fluctuations cause an erroneous component in the monitored rotational frequency signal. When the angular acceleration indicative signal is derived by differentiating the angular velocity signal **A/O**, such erroneous component is undesirably amplified, since the acceleration is in proportion to a square of the velocity value. Therefore, the erroneous component included in the monitored signal is not negligible when the measured object is rotated at a high speed.

Another conventional angular acceleration measurement apparatus which can provide the above-noted two-times greater frequency to assure the angular acceleration measurement at a high response speed, has been disclosed in Japanese Patent First Publication No. 59-217167. The Japanese document teaches the provision of the two-times greater frequency by means of a pair of pulse pick-ups, respectively arranged to generate a pair of substantially rectangular pulse signals electrically lying in reverse phase. The above-noted electrically reversed phase arrangement means that the probe of one pulse pick-up is aligned with the center of the ridge portion of the tooth and the probe of the other pulse pick-up is aligned with the center of the tooth groove. Each rectangular signal is supplied through the associated frequency-voltage converter (F/V converter) to an adder arranged for adding the two F/V converter signals with a predetermined gain 1/2, thereby resulting in an adder signal having two-times greater frequency when compared with the frequency of the pulse signal generated by the sole pulse pick-up. In this case, even if the response speed of the measurement is stepped up due to an increase in the number of the pulse pick-ups, a measurement accuracy of the angular acceleration can be affected by a pitch error of teeth of the inductor or an eccentricity between the central axis of the inductor and the rotary shaft of the measured rotating member.

## SUMMARY OF THE INVENTION

It is, therefore in view of the above disadvantages an object of the present invention to provide an improved angular acceleration measurement apparatus employing a disc-plate attached to a rotary shaft of a measured rotating member and at least two pulse pick-ups respectively generating pulses in proportion to revolution of the disc-plate, which can reduce an error of measurement occurring due to an eccentricity of the central axis of the disc-plate to the axis of the shaft of the measured rotating member, and consequently enhance the angular acceleration measurement accuracy.

It is another object of the invention to provide an angular acceleration measurement apparatus employing a disc-plate attached to a rotary shaft of a measured rotating member and at least two pulse pick-ups, which can assure a high accuracy of the angular acceleration measurement, irrespective of a relatively low machining accuracy of the disc-plate.

It is a further object of the invention to provide an angular acceleration measurement apparatus employing a disc-plate attached to a rotary shaft of a measured rotating member and at least two pulse pick-ups, which can perform a precise angular acceleration measurement at a high response speed.

In order to accomplish the aforementioned and other objects of the invention, an apparatus for measuring an angular acceleration of a rotary shaft, comprises a disc plate attached to the rotary shaft in such a manner as to outwardly extend from the rotary shaft, a pulse generator for generating a pulse signal having a frequency proportional to the number of revolution of the disc plate, a pulse processing circuit connected to the pulse generator to derive an angular acceleration of the disc plate, the pulse processing circuit comprising, a frequency-to-voltage converting means connected to the pulse generator for converting the frequency of the pulse signal from the pulse generator to a voltage signal indicative of an angular velocity of the disc plate, and a differentiator connected to the frequency-to-voltage converting means, for differentiating the angular velocity indicative voltage signal to generate an angular acceleration signal. The pulse generator includes at least two pulse pick-ups arranged in the vicinity of the periphery of the disc plate in such a manner as to angularly offset from each other by an identical phase angle difference with respect to the disc plate, and in addition the pulse processing circuit includes an adder arranged just upstream of or just downstream of the frequency-to-voltage converting means, for adding input signals to eliminate an erroneous component created due to an eccentricity of the center axis of the inductor to the axis of the disc plate from an adder output signal.

The pulse generator may include at least two pulse shaping circuits each connected to either one of the pulse pick-ups for waveform-shaping a sinusoidal signal caused by the pulse pick-up to a rectangular pulse signal, while the frequency-to-voltage converting means may include at least two frequency-to-voltage converters each connected to either one of the pulse shaping circuits. In addition to the above, the adder may be comprised of a voltage adding circuit arranged just downstream of the frequency-to-voltage converters for eliminating the erroneous component from the angular velocity indicative adder signal.

3

Alternatively, the pulse generator may include at least two pulse shaping circuits each connected to either one of the pulse pick-ups for waveform-shaping a sinusoidal signal caused by the pulse pick-up to a rectangular pulse signal, and the adder may include a pulse adding circuit being connected to all of the pulse shaping circuits for eliminating the erroneous component from the pulse signal generated by each pulse shaping circuit, and the frequency-to-voltage converting means may include a sole frequency-to-voltage converter arranged just downstream of the pulse adding circuit.

The disc plate is preferably comprised of a geared inductor having a plurality of teeth arranged on the periphery thereof at the same pitch and each pick-up is comprised of an electro-magnetic pulse pick-up radially aligned with the central axis of the inductor. Alternatively, the disc plate may be comprised of at least one optical slit plate having a plurality of slits radially arranged away from each other at the same pitch with respect to the central axis of the slit plate, a light emitting device opposing one surface of the slit plate, and a light receiving device opposing the other surface for receiving light passing through the slit plate.

## BRIEF DESCRIPTION OF THE DRAWINGS

Fig. 1 is a block diagram illustrating a first embodiment of an apparatus for measuring an angular acceleration according to the invention.

Fig. 2 is an explanatory view illustrating an eccentric state of the central axis of an inductor employed in the angular acceleration measurement apparatus to the rotary shaft of a measured rotating member.

Fig. 3 is a block diagram illustrating a second embodiment of an apparatus for measuring an angular acceleration according to the invention.

Fig. 4 is a block diagram illustrating a schematic construction of a conventional angular acceleration measurement apparatus.

## DESCRIPTION OF THE PREFERRED EMBODIMENTS

### First embodiment

Referring now to the drawings, particularly to Fig. 1, the angular acceleration measurement apparatus of the invention is exemplified in case of an electro-magnetic rotary encoder. As seen in Fig. 1, the measurement apparatus of the first embodiment includes a disc-like inductor **10**, and a pair of diametrically opposing pulse pick-ups **12a** and **12b** arranged in the vicinity of the outer circumferential surface of the inductor **10**. Note that the relative position relationship between the two pick-ups **12a** and **12b** is determined such that the respective pick-ups angularly offset from each other by an identical phase angle difference with respect to the inductor **10**. In the first embodiment, since the two pick-ups **12a** and **12b** are utilized, these pick-ups are diametrically arranged away from each other at an identical relative phase angle difference of 180°. The measurement apparatus of the first embodiment also includes a pair of pulse shaping circuits **13a** and **13b** respectively connected to the pick-ups **12a** and **12b**, a pair of frequency-to-voltage (F/V) converters **16a** and **16b**, an analogue adder **17**, and a differentiator **18**. The pulse shaping circuit **13a** is arranged to convert the sinusoidal signal generated by the pick-up **12a** to a rectangular pulse signal, while the pulse shaping circuit **13b** is arranged to convert the sinusoidal signal generated by the pick-up **12b** to a rectangular pulse signal. The F/V converter **16a** is connected to the pulse shaping circuit **13a** to convert the rectangular pulse signal created by the circuit **13a** to a voltage signal, while the F/V converter **16b** is connected to the pulse shaping circuit **13b** to convert the rectangular pulse signal created by the circuit **13b** to a voltage signal. The analogue adder **17** is arranged to add one of the two voltage signals multiplied by a predetermined gain 1/2 to the other voltage signal multiplied by the gain 1/2 and to standardize the voltage signals. The adder signal created by the adder **17** essentially serves as an angular velocity signal. The differentiator **18** differentiates the adder signal so as to generate an angular acceleration signal

Hereinbelow described is the relationship between an eccentricity of the central axis of the inductor 10 to the axis of the rotary shaft (not shown) of the measured rotating member and an erroneous component included in the angular acceleration signal.

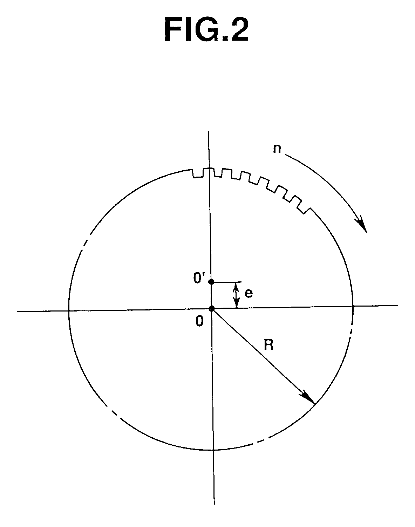

Referring to Fig. 2, **O** designates the axis of the rotary shaft of the measured rotating member, **O'** designates the central axis of the inductor **10**, **e** designates an eccentric distance between the central axis of the inductor **10** and the axis of the rotary shaft of the measured object, **R** designates an outside radius with regard to the outer periphery of the disc-like inductor **10**, and **n** designates a rotational number (r.p.m.) or a rotational frequency ($\sec^{-1}$) of the rotary shaft. The velocity **v** in the outermost periphery of the inductor **10** is represented by the following approximate expression (**1**).

$$v \fallingdotseq 2\pi Rn + 2\pi en \ \sin(2\pi nt) \quad \cdots (1)$$

The output frequency **f** of the pulse pick-up is proportional to the velocity **v**. The output frequency **f** is different from the actual frequency **n** of the shaft, because of the erroneous component (See the second term of the expression (**1**)) Subsequently, when the pulse train having the frequency **f** is fed to the F/V converter, the output **V** of the F/V converter becomes a voltage value proportional to the velocity **v**. As a result, the output voltage **V** includes the erroneous component at a rate of **esin(2πnt)/R** as shown in the following expression (**2**).

$$V \fallingdotseq K \ \{ \ 2\pi Rn + 2\pi en \ \sin(2\pi nt) \} \quad \cdots (2)$$

The voltage value **V** shown in the above expression (**2**) is equivalent to an angular velocity signal. A angular acceleration signal is derived by differentiating the voltage **V** by means of the differentiator **18**, as shown in the following expression (**3**).

$$d\dot{V}/dt \fallingdotseq K \ \{ \ 2\pi R(dn/dt) + (2\pi n)^2 e \ \cos(2\pi nt)$$
$$+ 2\pi en \ \sin(2\pi nt)(dn/dt) \} \quad \cdots (3)$$

In the expression (3), since the value **2πen sin(2πnt)(dn/dt)** of the third term is negligible when compared with the value (**2πe n sin(2πnt)(dn/dt)** of the second term, the value of the second term can regard substantially as the erroneous component. In a chassis dynamometer with an angular acceleration measurement apparatus, assuming that the outer diameter of the rotor of the dynamometer is 1061 mm and the inductor of the angular acceleration measurement apparatus has an eccentricity **e/R** of 1/2000 and the revolution **n** of the rotor is 500 r.p.m.(8.33 sec$^{-1}$) and in addition the outer diameter of the inductor is equal to that of the rotor, the value KR is represented by the following equation (**4**), since the peripheral velocity **v** (**=2πnR**) of the inductor corresponds to 100 km/h.

$$KR = 100/(2\pi \times 8.33) \fallingdotseq 1.91 \ [(km/h)/sec] \quad \cdots (4)$$

Under the above conditions, the maximum value of the erroneous component of the angular acceleration value is calculated by the following equation (**5**).

**K(2πn)$^2$ e = K(2πn)$^2$ R/2000 = (1.91/2000)(2π × 8.33)$^2$ = 2.62 [(km/h)/sec]     (5)**

In the above case that the eccentricity of the central axis of the inductor to the axis of the rotor is 1/2000 and the rotor is rotated at a relatively high speed, such as the velocity of 100 km/h, the above erroneous component 2.62 (km/h)/sec of the calculated value of the angular acceleration substantially corresponds to 0.074G, since the gravitational acceleration 1G is approximately replaced with 35.3 [(km/h)/sec]. In general, since the dynamometer is operated within an acceleration range ± 0.5G, such an erroneous component 0.074G is not negligible. The magnitude of the erroneous component is increased, as the rotational speed is increased towards a high speed range, because of a fundamental formula wherein an acceleration is proportion to a square of a velocity.

In the angular acceleration measurement apparatus according to the invention, since at least two pulse pick-ups are arranged to each other at an identical relative angular displacement with respect to the inductor, the erroneous component included in the voltage signal **V** generated by each F/V converter is eliminated through the adder **7**. In the first embodiment, supposing that the sign of the erroneous component {**2πKen sin(2πnt)**} (corresponding to the second term of the expression (**2**) ) included in the voltage signal from the F/V converter **16a** is a positive sign, the sign of the erroneous component {**2πKen sin(2πnt)**} included in the voltage signal from the F/V converter **16b** is a negative sign, since the two pick-ups **12a** and **12b** are diametrically arranged to each other at an identical phase angle difference of 180°. As a result, when both voltage signals are added together by means of the adder **17**, the above erroneous component is eliminated at a minimum. Thus, an error of the angular velocity is reduced at a minimum, and consequently an error of the angular acceleration is also reduced at a minimum. As set forth above, the angular acceleration measurement apparatus of the first embodiment can provide a precise angular acceleration measurement, irrespective of the eccentricity of the central axis of the inductor to the axis of the measured rotary shaft. In actual, since the measuring accuracy of an angular acceleration can be affected by the other factors, namely a pitch error of teeth formed on the periphery of the inductor, a slight eccentricity of the axis of the rotary shaft itself, and a slight concentricity of clearance hole of a bearing rotatably receiving the rotary shaft, it is impossible that the error of the angular acceleration reaches completely to zero. In case of the angular acceleration measurement apparatus of the first embodiment, the magnitude of the erroneous component of angular acceleration can be extremely reduced to 1/5 through 1/10, in comparison with a prior art angular acceleration measurement apparatus.

Second embodiment

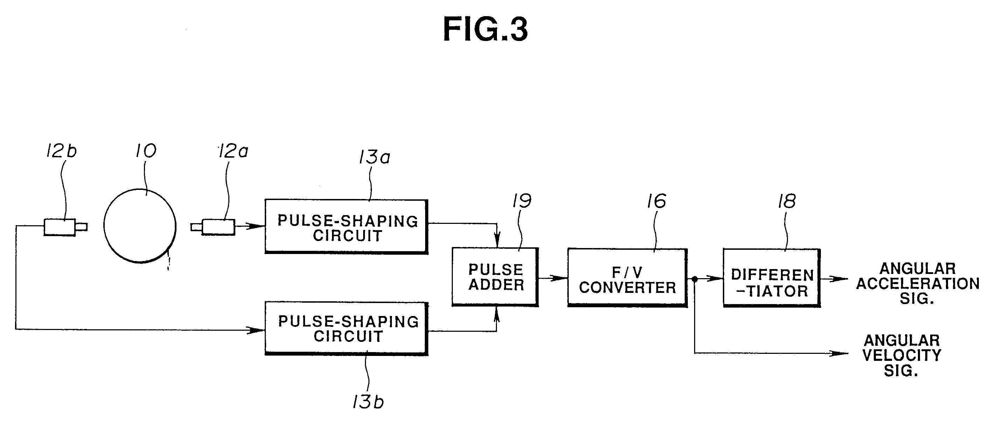

Referring now to Fig. 3, there is shown the second embodiment of the angular acceleration measurement apparatus applied to an electro-magnetic rotary encoder. The basic construction of the measurement apparatus of the second embodiment as shown in Fig, 3 is similar to that of the first embodiment as shown in Fig. 1. Therefore, the same reference numerals used in the first embodiment of Fig. 1 will be applied to the corresponding elements used in the second embodiment of Fig. 3, for the purpose of comparison between the first and second embodiments. The second embodiment is different from the first embodiment in that the erroneous component eliminating circuit being composed of a pair of F/V converters **16a** and **16b** and an adder **17** is replaced with a pulse adder **19** and a sole F/V converter **16**. As appreciated from Fig. 3, the output frequency signal of the pulse pick-up **13a** and the output frequency signal of the pulse pick-up **13b** are superposed through the pulse adder **19**. As shown in the previously described expression (**1**), the erroneous component $\{2\pi \mathbf{en} \sin(2\pi \mathbf{nt})\}$ included in the output frequency signal is eliminated because of the aforementioned identical phase angle difference arrangement of the two pick-ups. Thus, the voltage signal **V** generated by the F/V converter scarcely include the erroneous component. As a result, the measurement apparatus of the second embodiment can limit an erroneous component included in the angular acceleration value obtained through the differentiator **18** at a minimum. In the second embodiment, it is preferable that the pulse adder includes a pulse-train overlapping prevention circuit for preventing the output pulse signals from both the pick-ups **13a** and **13b** from overlapping each other.

As will be appreciated from the above, if the angular acceleration measurement apparatus of the invention is applied to a chassis dynamometer or a power train performance test machine, an electrical compensation or control of a moment of inertia of the rotor thereof may be accurately performed at the aid of a precisely measured angular acceleration value. This means the response speed and the controlling accuracy of the dynamometer or the power train performance test machine are enhanced in dependent on enhancement in the response speed and the measuring accuracy of an angular acceleration measurement.

Although the angular acceleration measurement apparatus of the preferred embodiment uses two opposing pulse pick-ups with a phase angle difference 180°, three pulse pick-ups may be radially arranged with respect to an inductor of an electro-magnetic rotary encoder at an identical phase angle difference 120°, for example.

Moreover, the geared inductor and the electro-magnetic pulse pick-ups utilized in the first and second embodiments may be replaced with at least one optical slit plate having a plurality of slits radially arranged away from each other at the same pitch with respect to the central axis of the slit plate, a light emitting device opposing one surface of the slit plate, and a light receiving device opposing the other surface for receiving light passing through the slit plate.

While the foregoing is a description of the preferred embodiments carried out the invention, it will be understood that the invention is not limited to the particular embodiments shown and described herein, but that various changes and modifications may be made without departing from the scope or spirit of this invention as defined by the following claims.

**Claims**

1. An apparatus for measuring an angular acceleration of a rotary shaft, comprising:
   a disc plate attached to said rotary shaft in such a manner as to outwardly extend from said rotary shaft;
   a pulse generator for generating a pulse signal having a frequency proportional to the number of revolution of said disc plate;
   a pulse processing circuit connected to said pulse generator to derive an angular acceleration of said disc plate;

said pulse processing circuit comprising a frequency-to-voltage converting means connected to said pulse generator for converting the frequency of the pulse signal from said pulse generator to a voltage signal indicative of an angular velocity of said disc plate, and a differentiator connected to said frequency-to-voltage converting means, for differentiating said angular velocity indicative voltage signal to generate an angular acceleration signal;

**characterized in that**

said pulse generator includes at least two pulse pick-ups arranged in the vicinity of the periphery of said disc plate in such a manner as to angularly offset from each other by an identical phase angle difference with respect to said disc plate; and **in that**

said pulse processing circuit includes an adder arranged just upstream of or just downstream of said frequency-to-voltage converting means, for adding input signals to eliminate an erroneous component created due to an eccentricity of the center axis of said inductor to the axis of said disc plate from an adder output signal.

2. The angular acceleration measuring apparatus as set forth in claim 1, **characterized in that** said pulse generator includes at least two pulse shaping circuits each connected to either one of said pulse pick-ups for waveform-shaping a sinusoidal signal caused by said pulse pick-up to a rectangular pulse signal, and said frequency-to-voltage converting means includes at least two frequency-to-voltage converters each connected to either one of said pulse shaping circuits, and said adder is comprised of a voltage adding circuit arranged just downstream of said frequency-to-voltage converters for eliminating the erroneous component from the angular velocity indicative adder signal.

3. The angular acceleration measuring appartus as set forth in claim 1, **characterized in that** said pulse generator includes at least two pulse shaping circuits each connected to either one of said pulse pick-ups for waveform-shaping a sinusoidal signal caused by said pulse pick-up to a rectangular pulse signal, and said adder includes a pulse adding circuit being connected to all of said pulse shaping circuits for eliminating the erroneous component from the pulse signal generated by each pulse shaping circuit, and said frequency-to-voltage converting means includes a sole frequency-to-voltage converter arranged just downstream of said pulse adding circuit.

4. The angular acceleration measuring apparatus as set forth in claim 1, **characterized in that** said disc plate is comprised of a geared inductor having a plurality of teeth arranged on the periphery thereof at the same pitch and each pick-up is comprised of an electromagnetic pulse pick-up radially aligned with the central axis of said inductor.

5. The angular acceleration measuring apparatus as set forth in claim 1, **characterized in that** said disc plate is comprised of at least one optical slit plate having a plurality of slits radially arranged away from each other at the same pitch with respect to the central axis of the slit plate, a light emitting device opposing one surface of said slit plate, and a light receiving device opposing the other surface for receiving light passing through said slit plate.

# FIG.1

EP 0 571 886 A1

# FIG.2

# FIG.3

EP 0 571 886 A1

# FIG.4
## (PRIOR ART)

EP 0 571 886 A1

European Patent Office    **EUROPEAN SEARCH REPORT**    Application Number

EP    93 10 8118

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN vol. 9, no. 90 (P-350)(1813) 19 April 1985 & JP-A-59 217 167 ( MEIDENSHA K.K. ) * abstract * | 1 | G01P15/16 G01P15/08 G01P3/486 G01P3/488 |
| A,D | WHOLE DOCUMENT | 2 | |
| Y A | DE-A-2 711 593 (JOHANNES HÜBNER FABRIK) * page 4, line 10 - line 24; figures 1-3 * | 1 5 | |
| A | FR-A-2 113 895 (DUNLOP HOLDINGS LTD) * page 2, line 16 - line 29 * * page 4, line 16 - line 35 * * page 7, line 4 - line 13; figures 2,3,7-10 * | 2,3,5 | |
| A | PATENT ABSTRACTS OF JAPAN vol. 1, no. 136 (E-62)11 October 1977 & JP-A-52 72 244 ( MATSUSHITA DENKI SANGYO K.K. ) * abstract * | 3,5 | |
| A | DE-A-1 913 814 (DAIMLER-BENZ AG) * page 2, line 23 - line 29; figure 2 * | 4 | **TECHNICAL FIELDS SEARCHED (Int. Cl.5)** G01P |

The present search report has been drawn up for all claims

| Place of search | Date of completion of the search | Examiner |
|---|---|---|
| THE HAGUE | 08 SEPTEMBER 1993 | HANSEN P. |